# DEMANDE DE BREVET EUROPEEN

(11) **EP 0 741 242 A1**
(43) Date de publication de la demande: **06.11.1996**
(21) Numéro de dépôt: 96400899.9
(22) Date de dépôt: 26.04.1996
(51) Int. Cl.: F02M 25/06, F01M 13/02

(54) **Elément de circuit d'admission d'air pour moteur à combustion interne**

(30) Priorité: 05.05.1995 FR 9505390
(71) Demandeur: Société Anonyme dite: REGIE NATIONALE DES USINES RENAULT, 92109 Boulogne Billancourt (FR)
(72) Inventeur: Cezard-Sibillot, Frédéric, 91700 Ste Genevieve des bois (FR); Simonin, Jacques, 91700 Ste Genevieve des bois (FR); Delafoy, Emmanuel, 91580 Etrechy (FR); Miroy, Patrick, 91590 Boissy-le-Cutte (FR)
(74) Mandataire: Fernandez, Francis Lionel

(57) **Abrégé**

Elément de circuit d'admission pour moteur à combustion interne du type présentant un boîtier (2), ledit boîtier (2) comprenant une sortie d'air (3), une entrée d'air et une entrée des gaz de carter (5), caractérisé en ce que ladite admission de gaz de carter (5) coopère avec des moyens déflecteurs (6) aptes à diriger les gaz de carter contre la paroi (9) dudit boîtier (2).

## Description

La présente invention se rapporte à un moteur à combustion interne équipant notamment un véhicule automobile. Elle concerne plus particulièrement les éléments du circuit d'admission d'air, tel que le filtre à air, comportant une entrée pour la réaspiration des gaz de carter.

D'une façon générale les normes concernant la pollution des véhicules automobiles équipés de moteurs à combustion interne se sévérisent chaque jour davantage dans l'ensemble des pays industrialisés. L'industrie automobile est donc aujourd'hui toute entière mobilisée à trouver des solutions techniques pour répondre à ces contraintes et ce, sans trop pénaliser ni les performances des moteurs ni leur prix de revient.

Les normes antipollution en vigueur dans l'automobile imposent notamment de maintenir, le carter des moteurs à combustion interne en dépression par rapport à l'atmosphère. En effet pendant le fonctionnement d'un moteur à combustion interne, une certaine quantité de gaz brûlés s'échappent des chambres de combustion vers le carter du moteur au travers des différents jeux de fonctionnement, tels que ceux existant entre les segments des pistons et les parois des cylindres ou entre les soupapes et leurs guides. L'accumulation des gaz dans le carter tend ensuite à les faire fuir vers l'atmosphère, ce qui constitue une pollution importante de l'environnement.

De nombreux dispositifs ont été développés pour assurer la mise en dépression des carters de moteur à combustion interne. La réaspiration des gaz de carter, décrit notamment dans la demande de brevet français N° FR-A-2.046.248, est le moyen le plus communément employé pour répondre à cette exigence. A cet effet, le carter est mis en communication avec le circuit d'admission d'air du moteur, de façon que s'établisse un débit d'aspiration suffisant pour éviter toute surpression dans le carter quelles que soient les conditions de fonctionnement du moteur.

Toutefois la mise en communication du carter et du circuit d'air par l'intermédiaire d'une conduite de recirculation est particulièrement délicate à réaliser.

En effet, cette communication peut provoquer dans certaines conditions de fonctionnement du moteur, ralenti ou encore décélération, l'instauration d'une forte dépression dans le carter susceptible d'entraîner l'aspiration de l'huile contenue dans ce dernier. Cette aspiration de l'huile avec les gaz de carter a pour effet d'engendrer une pollution contraire au but recherché.

De plus le mélange des gaz de carter à l'air d'admission doit être parfaitement dosé sous peine d'entraîner des combustions non satisfaisantes voire des ratés d'allumage.

Pour contrôler la dépression dans le carter et la recirculation des gaz de carter, la demanderesse a développé une technique plus particulièrement adaptée aux moteurs comportant un volet ou papillon piloté commandant la circulation de l'air à travers le circuit d'admission (moteurs à allumage commandé ainsi que certains moteurs à allumage par compression).

Cette technique consiste à connecter le carter à deux points distincts du circuit d'admission d'air à l'aide de deux conduites adaptées munies d'ajutages appropriés, une première conduite de faible section appelée "branche basse" débouchant en aval du papillon, dans le sens de l'écoulement de l'air et une seconde conduite de plus forte section appelée "branche haute" débouchant en amont du papillon.

La connexion de la branche haute avec le circuit d'admission d'air peut s'effectuer sur n'importe lequel des éléments constituant le circuit d'admission d'air et s'étendant en amont du papillon et par exemple directement sur le filtre à air comme cela est décrit dans le document WO-A-9009520.

La connexion de la branche haute sur le circuit de recirculation d'air en amont du papillon présente toutefois des inconvénients notamment lors du fonctionnement du moteur par grands froids. En effet, dans de telles conditions climatiques, le contact des gaz de carter chauds chargés de vapeur d'eau issus de la branche haute et de l'air froid d'admission génère la formation de givre qui s'avère susceptible de bloquer le fonctionnement du papillon.

Le but de la présente invention est donc de remédier aux inconvénients précités de l'art antérieur, en adaptant l'élément du circuit d'admission sur lequel est connectée la branche haute des gaz de carter pour y piéger le givre susceptible de se former et ainsi à éviter toute propagation de ce givre dans le circuit d'admission d'air du moteur et ce, d'une façon particulièrement simple.

L'élément de circuit d'admission pour moteur à combustion interne selon l'invention, comprend un boîtier, ce boîtier présentant une entrée d'air, une sortie d'air et une entrée des gaz de carter.

Selon l'invention, cet élément de circuit d'admission pour moteur à combustion interne est caractérisé en ce que l'entrée des gaz de carter coopère avec des moyens déflecteurs aptes à diriger les gaz de carter contre la paroi du boîtier.

Cette disposition a pour effet de provoquer le dépôt de la quasi-totalité des particules de givre contenues dans les gaz de carter sur les parois froides du boîtier et des moyens déflecteurs. Ce qui a pour effet d'éliminer toute propagation du givre plus en aval dans le circuit d'admission d'air du moteur et donc de préserver le bon fonctionnement du papillon.

Selon une autre caractéristique de l'élément de circuit d'admission pour moteur à combustion interne objet de l'invention, ces moyens déflecteurs sont formés par un élément de tube dans lequel débouche l'entrée des gaz de carter, cet élément de tube s'étendant contre la paroi même du boîtier.

Selon une autre caractéristique de l'élément de circuit d'admission pour moteur à combustion interne objet de l'invention, cet élément de tube est fermé à une extrémité et présente à son autre extrémité une ouverture échancrée dirigée vers la paroi du boîtier.

Selon une autre caractéristique de l'élément de circuit d'admission pour moteur à combustion interne objet de l'invention, cet élément de tube vient de construction avec le boîtier.

Selon une autre caractéristique de l'élément de circuit d'admission pour moteur à combustion interne objet de l'invention, cet élément de tube a une section sensiblement semi-circulaire.

On comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :
- la figure 1 est une vue schématique partielle du filtre à air adapté selon l'invention ;
- la figure 2 est une vue en coupe, selon la ligne II-II de la figure 1, du filtre à air objet de l'invention.

Conformément aux figures, seuls les éléments nécessaires à la compréhension de l'invention ont été représentés. De plus, pour faciliter la compréhension des dessins, les mêmes pièces portent les mêmes références d'une figure à l'autre.

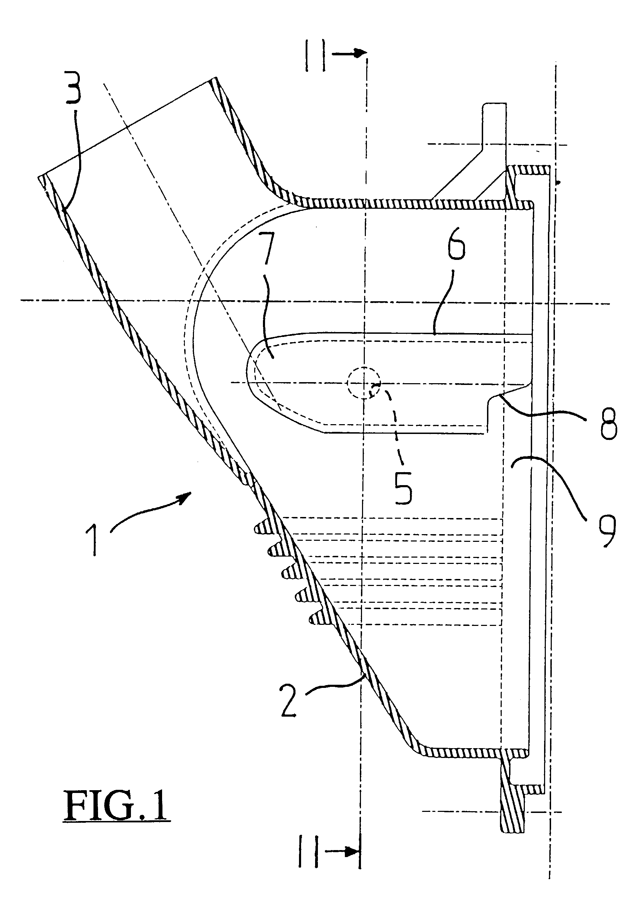

Ainsi, on a représenté sur la figure 1, qu'une partie du boîtier d'un filtre à air 1 destiné à équiper le circuit d'admission de l'air comburant d'un moteur à combustion interne.

Cette partie qui forme un couvercle 2 est destinée à recouvrir le corps du boîtier proprement dit, non figuré, dans lequel est logée la cartouche filtrante et où est ménagée au moins une entrée d'air brut.

Le couvercle 2, définissant le compartiment d'air pur, présente une sortie d'air 3 destinée à être reliée par exemple par un tuyau d'admission flexible au boîtier papillon. Il présente également une entrée 5, pour les gaz de carter, destinée à être connectée à la branche haute du circuit de réaspiration de ces gaz.

Conformément à l'invention, l'entrée 5 des gaz de carter est masquée par un élément de tube oblong 6 fixé à la paroi 9 du couvercle 2 et qui a pour fonction de diriger les gaz contre cette même paroi, dans une direction sensiblement opposée à celle de la sortie d'air 3.

Cet élément de tube 6 est fermé à une extrémité 7 et présente à son autre extrémité 8 une ouverture échancrée favorisant le balayage de la paroi 9 par les gaz de carter.

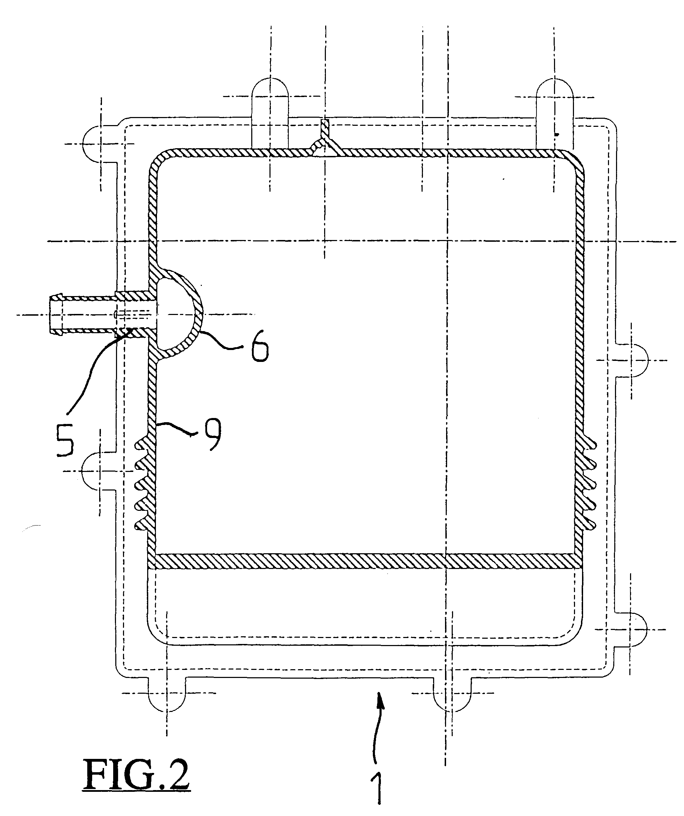

Le carter du filtre à air représenté est réalisé en matière plastique et comme on peut le voir à la figure 2, l'élément de tube 6 vient de construction avec le couvercle 2. La section de cet élément de tube 6 est de forme sensiblement semi-circulaire, elle pourrait toutefois être réalisée avec d'autres formes et notamment des formes carrées ou rectangulaires.

Grâce à cet élément de tube 6, dont la mise en place est des plus simples, on force l'écoulement des gaz de carter à balayer la paroi du boîtier du filtre à air avant que ces derniers ne soient évacués à travers la sortie d'air 3. De la sorte, lorsque les gaz de carter pénètrent dans le boîtier du filtre à air 1 chargés de particules de givre du fait de conditions climatiques particulièrement rigoureuses, celles-ci vont naturellement se déposer sur la paroi intérieure de l'élément de tube 6 et sur la paroi froide 9 du boîtier du filtre à air 1, et ne seront donc pas envoyées dans le circuit d'admission du moteur.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi l'invention n'est pas limitée au seul filtre à air mais concerne tout élément du circuit d'admission d'air d'un moteur sur lequel vient se connecter la branche haute de recirculation des gaz de carter.

## Revendications

1. Elément de circuit d'admission pour moteur à combustion interne du type présentant un boîtier (2), ledit boîtier (2) comprenant une sortie d'air (3), une entrée d'air et une entrée des gaz de carter (5), caractérisé en ce que ladite admission de gaz de carter (5) coopère avec des moyens déflecteurs (6) aptes à diriger les gaz de carter contre la paroi (9) dudit boîtier (2).

2. Elément de circuit d'admission pour moteur à combustion interne selon la revendication 1, caractérisé en ce que lesdits moyens déflecteurs sont formés par un élément de tube (6) dans lequel débouche ladite entrée des gaz de carter (5), cet élément de tube (6) s'étendant contre ladite paroi (9) du boîtier (2).

3. Elément de circuit d'admission pour moteur à combustion interne selon la revendication 2, caractérisé en ce que ledit élément de tube (6) est fermé à une extrémité (7) et présente à son autre extrémité une ouverture (8) échancrée dirigée vers ladite paroi (9) dudit boîtier (2).

4. Elément de circuit d'admission pour moteur à combustion interne selon l'une quelconque des revendications 2 à 3, caractérisé en ce que ledit élément de tube (6) vient de construction avec ledit boîtier (2).

5. Elément de circuit d'admission pour moteur à combustion interne selon l'une quelconque des revendications 2 à 4, caractérisé en ce que ledit élément de tube (6) à une section sensiblement semi circulaire.
